# EUROPEAN PATENT APPLICATION

(11) **EP 3 572 706 A1**
(43) Date of publication of application: **27.11.2019**
(21) Application number: 18020229.3
(22) Date of filing: 24.05.2018
(51) Int. Cl.: F16L 57/06, F16L 9/18, G01M 3/28, C21C 5/46, F27D 3/16

(54) **APPARATUS AND METHOD FOR WEAR MONITORING OF A PIPE**

(71) Applicant: Linde Aktiengesellschaft, 80331 München (DE)
(72) Inventor: Cameron, Andrew, Tattenhall, Chester CH3 9HD (GB); Sandor, Dezsi, 85354 Freising (DE)
(74) Representative: Gellner, Bernd

(57) **Abstract**

The present invention relates to an apparatus (100) for wear monitoring of a pipe and to a method for wear monitoring of a pipe using an apparatus (100) of that kind comprising an inner pipe (110) adapted to be brought into fluid communication with the pipe to be monitored, an outer pipe (120) encompassing at least an axial portion of the inner pipe (110), wherein a space (115) between the outer pipe (120) and the inner pipe (110) is adapted to be vacuumed and/or pressurised with a predetermined pressure value, and a pressure evaluation unit (130) adapted to evaluate whether a pressure in the space (115) between the outer pipe (120) and the inner pipe (110) reaches a predetermined threshold value.

## Description

The present invention relates to an apparatus for wear monitoring of a pipe and a method for wear monitoring of a pipe using an apparatus of that kind.

### Prior art

Pipes or lances, for example jacketed pipes can be used for providing fluid streams. If the fluid stream comprises solids, especially abrasive solids, there is the danger that the inner surface of the pipe is damaged.

In metallurgy pipes or lances can e.g. be used to inject solids (e.g. chromite and ferrochrome particulates) in a gas stream into a metallurgical converter, for example a metallurgical furnace for smelting a metallic material. The solids in the gas stream can cause abrasion of the pipe and can eventually lead to a damage of the pipe.

Pipes can e.g. be jacketed pipes with an inner pipe, through which the fluid stream is passed, and with an outer pipe encompassing the inner pipe and defining a space between the inner pipe and the outer pipe, which can e.g. be vacuumed for isolation or filled with another fluid e.g. for cooling. If a gas stream with abrasive solids is passed through the inner pipe, there is the danger of abrasion and damage of the inner pipe, which could lead to a mixture of the fluid in the space between the outer and inner pipes and the fluid stream in the inner pipe or to a collapse of the vacuum. Depending on the fluids, such a mixture could cause exothermic reactions and further damages of the pipe. For example, in case of oxygen used as the fluid between the inner pipe and the outer pipe, damage of the inner pipe would result in an oxygen break-through where oxygen reacts with the solid content of the inner pipe causing a quick exothermic reaction which can cause lance damage or problems in the production. The current practice for monitoring is that the lance is taken out from production for endoscopic inspection. This, however, causes downtime in production and extra workload for otherwise available manpower on site.

It is therefore desirable to provide a possibility for wear or abrasion monitoring of a pipe such that wear or abrasion of the pipe can timely be detected.

### Disclosure of the invention

According to the present invention an apparatus for wear monitoring of a pipe or a lance and a method for wear monitoring of a pipe or a lance using an apparatus of that kind with the features of the independent claims are provided. Preferred embodiments and advantages of a method and a furnace according to the invention are subject of the dependent claims and of the following description. Advantages and preferred embodiments of the apparatus and the method according to the invention arise from the following description in an analogous manner.

The apparatus according to the invention comprises an inner pipe, particularly with ceramic layer, adapted to be brought into fluid communication with the pipe to be monitored, particularly with an inner pipe of the pipe to be monitored. The apparatus further comprises an outer pipe encompassing at least an axial portion of the inner pipe of the apparatus, wherein a space between the outer pipe and the inner pipe is adapted to be vacuumed and/or pressurised to a predetermined pressure value. A pressure evaluation unit is provided and adapted to evaluate whether a pressure in the space between the outer pipe and the inner pipe reaches a predetermined threshold value.

In the course of the method according to the present invention for wear monitoring of the pipe the inner pipe of the apparatus is brought into fluid communication with the pipe to be monitored. For this purpose the apparatus and the pipe are expediently connected, e.g. by means of a flange. Thus, a fluid or fluid stream passing through the pipe to be monitored particularly at least in part also passes through the inner pipe of the apparatus. Therefore, the inner pipe is exposed to the same danger of abrasion by means of the fluid or by means of abrasive particles in the fluid as the pipe to be monitored. To this end, the material and wall thickness of the inner pipe of the apparatus and of the inner pipe to be monitored should be the same.

The apparatus is particularly connected with an end of the pipe to be monitored, where abrasion is more likely to happen. If, for example, abrasion is more likely to happen on the cold side (upper side) of the lance, the apparatus should be connected with the lance at an upper side.

In order to detect damage of the inner pipe because of abrasion, the pressure in the space between the inner and outer pipe is particularly monitored by means of the pressure evaluation unit. For this purpose, the space between the outer pipe and the inner pipe is vacuumed or pressurised. Thus, the predetermined pressure value is provided in the space. If the space is vacuumed the predetermined pressure value is particularly in the range between 10⁻¹ mbara and 10⁻⁵ mbara.

If there is damage of the inner pipe of the apparatus, fluid communication between the inner pipe and the outer pipe will be established and the pressure in the space between inner and outer pipe will change. If the space between inner and outer pipe is vacuumed and there is damage of the inner pipe, fluid can flow from the inner pipe to the space between the inner and the outer pipe and the pressure in this space will be increased. If the space between inner and outer pipe is pressurised and there is damage of the inner pipe, there will be a fluid flow from the outer pipe to the inner pipe and the pressure in the space between inner and outer pipe will decrease.

According to the present method, by means of the pressure evaluation unit it is therefore evaluated whether the pressure in the space between the outer pipe and the inner pipe reaches the predetermined threshold value. The predetermined threshold value can especially be in the range between 10⁻¹ mbara and 1 mbara if the space between inner and outer pipe is vacuumed. If the pressure reaches the predetermined threshold value it is particularly concluded that there is a damage of the inner pipe and that damage also is likely to occur in the monitored pipe. Thus, a predetermined action is performed if the pressure in the space between the outer pipe and the inner pipe reaches the predetermined threshold value. By means of this action damage of the monitored pipe is particularly prevented. Preferably, maintenance and/or repair of the pipe is performed as the predetermined action.

The invention therefore provides a possibility for monitoring wear or abrasion of the pipe such that wear or abrasion of the pipe can timely be detected before damage of the pipe occurs. Particularly, a continuous monitoring of the entire pipe can be provided. Damage of the pipe can therefore be prevented. It is particularly not necessary to repeatedly take the pipe out from production to perform maintenance of the pipe in constant intervals. By means of the present invention, accurate assumptions can be made when maintenance or service of the pipe needs to be performed in order to prevent damage to the pipe. Maintenance can therefore be performed "on demand", i.e. when it is necessary and when there is potential danger of pipe damage. Downtimes of the pipe can thus be reduced and operating time can be increased.

According to particularly preferred embodiment a pressure switch is provided as the pressure evaluation unit, adapted to be closed or opened if the pressure in the space between the outer pipe and the inner pipe reaches a predetermined threshold value. Particularly, an electrical contact is closed by the pressure switch if the pressure in the space reaches the predetermined threshold value. Thus, an electrical signal is particularly created when damage of the inner pipe occurs and thus when there is a danger of pipe damage. Alternatively or additionally, a pressure sensor or pressure transmitter can be provided as the pressure evaluation unit. Pressure switches or pressure transmitters yield an easy and inexpensive possibility for effectively monitoring the pipe.

Preferably, the outer pipe comprises at least one port or terminal for vacuuming and/or pressurising and/or providing the pressure evaluation unit. According to a particularly preferred embodiment, the outer pipe comprises a first port for vacuuming and/or pressurising and a second port for providing the pressure evaluation unit. Particularly, a vacuum pump can be connected with the port or one of the ports in order to create a vacuum in the space between the inner and outer pipe. It is also possible to connect a pump with the port or one of the ports in order to increaser the pressure in the space.

Advantageously, a first flange, particularly a flat flange, is provided at a first end of the inner pipe and a second flange, particularly a threaded flange, is provided at a second end of the inner pipe. Preferably, the first end of the inner pipe is connected with the first flange by means of a welded joint. Alternatively or additionally, the second end of the inner pipe is connected with the second flange by means of a threaded joint. The apparatus can thus be connected with the pipe by means of the first or the second flange. Preferably, the apparatus can be connected with the pipe to be monitored by means of the second flange, which is expediently a threaded flange.

According to a preferred embodiment, a first end of the outer pipe is connected with the first flange, preferably by means of a welded joint. A second end of the outer pipe is preferably connected with the first pipe, preferably by means of a collar. This collar is particularly welded to the second end of the outer pipe and to an outer surface of the inner pipe. According to a particularly preferred embodiment, the first end of the outer pipe and the first end of the inner pipe are each welded to the first flange. The outer pipe encompasses only an axial portion of the inner pipe from the first end of the inner pipe to a location at which the second end of the outer pipe is connected with the outer surface of the inner pipe by means of the collar. The second end is connected with the second flange by means of the threaded joint. A distance between the collar and the second flange is particularly minimised and relatively small, e.g. in the range between 5 mm and 20 mm.

The invention is particularly advantageous for jacketed pipes or lances, e.g. vacuum jacketed pipes, which also comprise inner and outer pipes.

The invention further provides a pipe system including a pipe to be monitored and an apparatus according to the invention, wherein the pipe or lance to be monitored comprises an inner pipe, wherein the inner pipe of the apparatus is adapted to be brought into fluid communication with this inner pipe of the pipe to be monitored. The pipe to be monitored further advantageously comprises an outer pipe encompassing at least an axial portion of the inner pipe of the pipe to be monitored. The apparatus is particularly not in fluid communication with this outer pipe of the pipe. It is also possible that the pipe to be monitored preferably comprises a second outer pipe encompassing at least an axial portion of the outer pipe of the pipe to be monitored. The apparatus is particularly also not in fluid communication with this second outer pipe of the pipe.

Particularly, a first fluid or fluid stream can be passed through the inner pipe of the pipe to be monitored and thus through the inner pipe of the apparatus. This first fluid can particularly be a gas stream with abrasive solids. A second fluid can particularly be provided to the outer pipe and thus to a space between the inner and the outer pipe of the pipe to be monitored. This second fluid can particularly be provided for insulation and/or can e.g. be oxygen. Alternatively, a vacuum can especially be created in this space. A third fluid can particularly be provided to the second outer pipe and thus to a space between the outer pipe and the second outer pipe of the pipe to be monitored.

This third fluid can especially be provided for cooling and can e.g. be water. An example of such a pipe system is a Dual Phase Lance used to inject abrasive solids, e.g. chromite and ferrochrome particulates, together with an oxygen jet into metallurgical converters.

Therefore, the invention is particularly advantageous for pipes used in metallurgy, e.g. to inject solids (e.g. chromite and ferrochrome particulates) in a gas stream into a metallurgical converter, for example a metallurgical furnace for smelting a metallic material. For this purpose, the gas stream with these abrasive solids is passed through the inner pipe of the pipe to be monitored.

The invention further provides a method for wear monitoring of a pipe using an apparatus according to the present invention, comprising the steps of bringing the inner pipe of the apparatus into fluid communication with the pipe to be monitored; vacuuming or pressurising the space between the outer pipe and the inner pipe with a predetermined pressure value; evaluating whether a pressure in the space between the outer pipe and the inner pipe reaches a predetermined threshold value by means of the pressure evaluation unit; performing a predetermined action if the pressure in the space between the outer pipe and the inner pipe reaches the predetermined threshold value. Preferably maintenance and/or repair of the pipe to be monitored is performed as the predetermined action.

Embodiments and advantages of the method according to the present invention result in an analogous manner from the above description of the apparatus according to the present invention.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows a preferred embodiment of an apparatus according to the invention connected with a pipe to be monitored in a sectional view.
- Fig. 2: schematically shows a preferred embodiment of an apparatus according to the invention in a sectional view.
- Fig. 3: schematically shows a preferred embodiment of a method according to the invention as a block diagram.

### Detailed Description of the Drawing

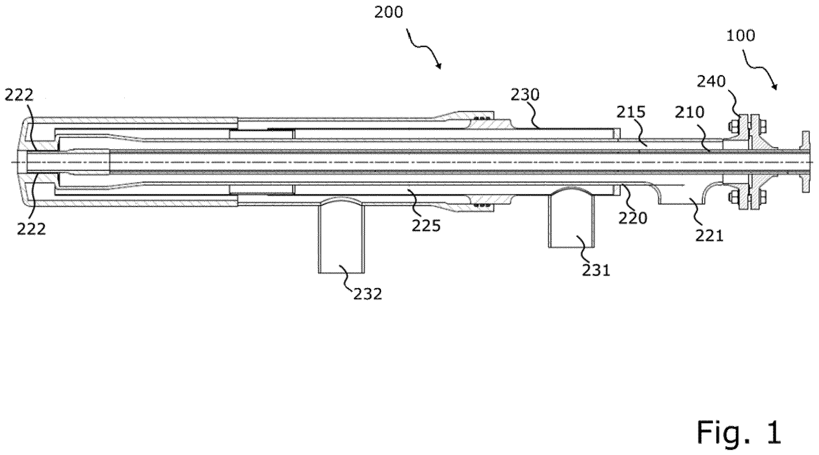

Fig. 1 schematically shows a preferred embodiment of a system according to the present invention including an apparatus 100 according to the present invention connected to a pipe 200 to be monitored in a sectional view.

The pipe 200 comprises an inner pipe 210, an outer pipe 220 encompassing an axial portion of the inner pipe 210, and a second outer 230 pipe encompassing an axial portion of the outer pipe 220.

A first fluid or fluid stream can be passed through the inner pipe 210. For example, a gas stream with abrasive solids, especially chromite and ferrochrome particulates, can be passed through the inner pipe 210 to be injected into a metallurgical converter, e.g. a metallurgical furnace.

A second fluid, e.g. oxygen, is provided to a first space 215 between the inner pipe 210 and the outer pipe 220 by means of a port 221. The second fluid can exit this first space 215 at an outlet 222.

A third fluid, e.g. water, is provided to a second space 225 between the outer pipe 220 and the second outer pipe 230. For this purpose an inlet 231 and an outlet 232 are provided for the third fluid.

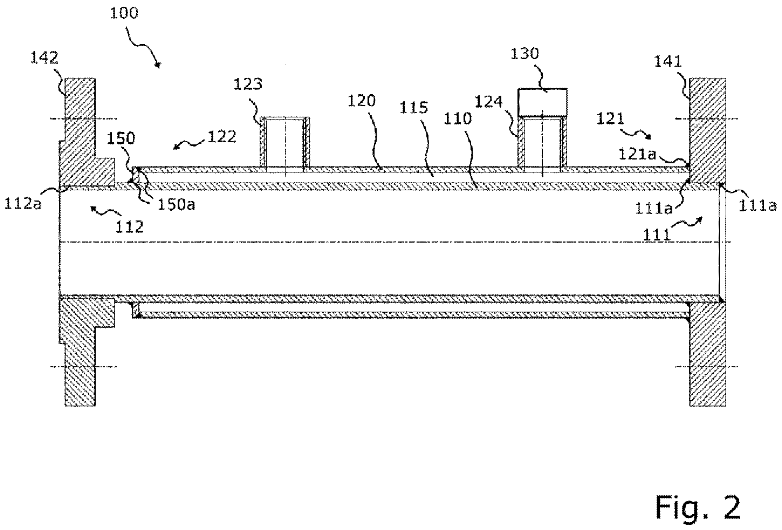

At one end of the inner pipe 210 a flange 240 is provided. By means of this flange 240 the pipe 200 is connected with the apparatus 100 for wear monitoring of the pipe 200 according to a preferred embodiment of the present invention, which is schematically shown in Fig. 2. The apparatus 100 will now be described in reference to Fig. 2.

The apparatus 100 comprises an inner pipe 110 adapted to be brought into fluid communication with the pipe 200, particularly with the inner pipe 210. A diameter of the inner pipe 110 is particularly identical or at least substantially identical to a diameter of the inner pipe 210. Same is true in respect of material and wall thickness. The outer pipe 220 and the second outer pipe 230 are not in fluid communication with the apparatus.

The apparatus 100 further comprises an outer pipe 120 encompassing an axial portion of the inner pipe 110. A space 115 between the outer pipe 120 and the inner pipe 110 is adapted to be vacuumed and/or pressurised with a predetermined pressure value. For this purpose, the outer pipe 120 comprises a first port 123. A pump or vacuum pump or gas source for pressurization can particularly be connected with this first port 123.

The outer pipe 120 further comprises a second port 124 for providing a pressure evaluation unit 130. This pressure evaluation unit 130 is adapted to evaluate whether the pressure in the space 115 reaches a predetermined threshold value. A pressure switch is provided as the pressure measurement unit 130, which closes a contact if the pressure in the space 115 reaches the predetermined threshold value.

A first end 111 of the inner pipe 110 is connected with a first flange 141, especially a flat flange, by means of welded joints 111 a. By means of the second flange 142 and by means of the flange 240 (see Fig. 1) the apparatus 100 and the pipe 200 are connected with each other. A second end 112 of the inner pipe 110 is connected with the second flange 142, particularly a threaded flange, by means of a threaded connection 112a.

Further, a first end 121 of the outer pipe 120 is connected with the first flange 141 by means of welded joints 121a. A second end 122 of the outer pipe 120 is connected with the first pipe 110 by means of a collar 150. This collar 150 is connected to the second end 122 of the outer pipe 120 and to an outer surface of the inner pipe 110 by means of welded joints 150a.

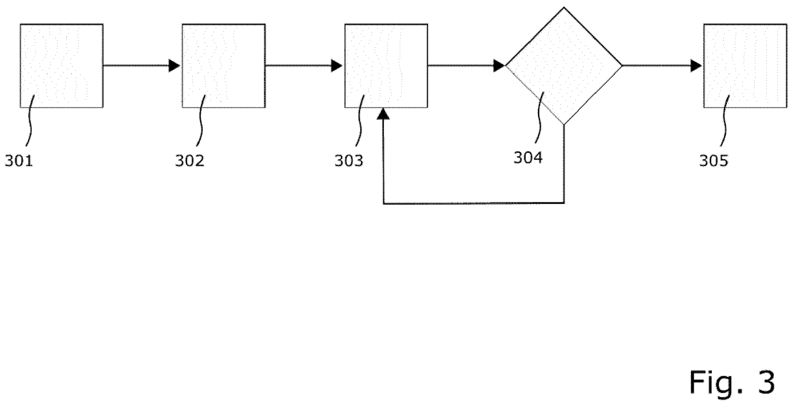

Fig. 3 schematically shows a preferred embodiment of a method according to the invention as a block diagram.

In step 301 the pipe 200 and the apparatus 100 are connected with each other by means of the flanges 142 and 240. Thus, the inner pipe 110 of the apparatus 100 is brought into fluid communication with the inner pipe 210 of the pipe 200 to be monitored. By means of the flange 141 the apparatus 100 is further connected with a supply unit in order to supply the gas comprising the abrasive solids. The pipe 200 is further connected with metallurgical converter, e.g. a metallurgical furnace.

In step 302 a vacuum with the predetermined pressure value of e.g. 10⁻² mbara is created in the space 115 between the outer pipe 120 and the inner pipe 110. Moreover, in step 302 oxygen is provided to the space 215 and water is provided to the space 225.

In step 303 the system of pipe 200 and apparatus 100 is activated and the gas stream with the abrasive solids is passed through the inner pipes 110 and 210.

In step 304 it is evaluated whether the pressure in the space 115 between the outer pipe 120 and the inner pipe 110 reaches the predetermined threshold value of e.g. 10⁻¹ mbara by means of the pressure switch 130. If the pressure does not reach the threshold value, operation is continued and the gas stream in the inner pipes 110, 120 is maintained.

If the pressure reaches the threshold value, it can be concluded that there is damage in the inner pipe 110 and that fluid flows from the inner pipe 110 to the space 115 between the inner pipe 110 and the outer pipe 120 such that the pressure in the space 115 increases. Thus, there is also the danger that damage in the inner pipe 210 of the monitored pipe 200 might occur.

When the pressure reaches the threshold value, the pressure switch 130 closes the contact and an electrical signal is created. In response to this electrical signal a predetermined action is performed in step 305. Particularly maintenance and if necessary repair of the pipe 200 is performed ad predetermined action.

## Claims

1. An apparatus (100) for wear monitoring of a pipe (200) comprising
an inner pipe (110) adapted to be brought into fluid communication with the pipe (200) to be monitored;
an outer pipe (120) encompassing at least an axial portion of the inner pipe (110), wherein a space (115) between the outer pipe (120) and the inner pipe (110) is adapted to be vacuumed and/or pressurised with a predetermined pressure value;
a pressure evaluation unit (130) adapted to evaluate whether a pressure in the space (115) between the outer pipe (120) and the inner pipe (110) reaches a predetermined threshold value.

2. The apparatus (100) according to claim 1, wherein a pressure switch is provided as the pressure evaluation unit (130), adapted to be closed or opened if the pressure in the space (115) between the outer pipe (120) and the inner pipe (110) reaches the predetermined threshold value.

3. The apparatus (100) according to claim 1 or 2, wherein the outer pipe (120) comprises at least one port (123, 124) for vacuuming and/or pressurising and/or providing the pressure evaluation unit (130).

4. The apparatus (100) according to claim 3, wherein the outer pipe (120) comprises
a first port (123) for vacuuming and/or pressurising and
a second port (124) for providing the pressure evaluation unit (130).

5. The apparatus (100) according to any one of the preceding claims, further comprising
a first flange (141), particularly a flat flange, provided at a first end (111) of the inner pipe (110) and
a second flange (142), particularly a threaded flange, provided at a second end (112) of the inner pipe (110).

6. The apparatus (100) according to claim 5, wherein
the first end (111) of the inner pipe (110) is connected with the first flange (141) by means of a welded joint (111a) and/or
the second end (112) of the inner pipe (110) is connected the second flange (142) by means of a threaded connection (112a).

7. The apparatus (100) according to any claim 5 or 6, wherein a first end (121) of the outer pipe (120) is connected with the first flange (141), preferably by means of a welded joint (121a).

8. The apparatus (100) according to any one of the preceding claims, wherein a second end (122) of the outer pipe (120) is connected with the first pipe (110), particularly by means of a collar (150).

9. A pipe system including a pipe (200) to be monitored and an apparatus (100) according to any one of the preceding claims, wherein the pipe (200) to be monitored comprises
an inner pipe (210), wherein the inner pipe (110) of the apparatus (100) is adapted to be brought into fluid communication with the inner pipe (210) of the pipe (200) to be monitored;
an outer pipe (220) encompassing at least an axial portion of the inner pipe (210) of the pipe (200) to be monitored; and
particularly a second outer pipe (230) encompassing at least an axial portion of the outer pipe (220) of the pipe (200) to be monitored.

10. A method for wear monitoring of a pipe using an apparatus (100) according to any one the preceding claims, comprising the steps of:
bringing the inner pipe (110) of the apparatus into fluid communication with the pipe (200) to be monitored (301);
vacuuming or pressurising the space (115) between the outer pipe (120) and the inner pipe (110) with a predetermined pressure value (302);
evaluating whether a pressure in the space (115) between the outer pipe (120) and the inner pipe (110) reaches a predetermined threshold value by means of the pressure evaluation unit (130; 304);
performing a predetermined action if the pressure in the space (115) between the outer pipe (120) and the inner pipe (110) reaches the predetermined threshold value (305).

11. The method according to claim 10, wherein maintenance and/or repair of the pipe (200) is performed as the predetermined action (305).
